(19) Europäisches Patentamt
European Patent Office
Office européen des brevets

(11) **EP 2 307 863 B1**

(12) **EUROPEAN PATENT SPECIFICATION**

(45) Date of publication and mention
of the grant of the patent:
**16.11.2011 Bulletin 2011/46**

(21) Application number: **09790873.5**

(22) Date of filing: **28.07.2009**

(51) Int Cl.:
**G01J 3/44** $^{(2006.01)}$        **G01N 21/65** $^{(2006.01)}$

(86) International application number:
**PCT/US2009/051924**

(87) International publication number:
**WO 2010/014583 (04.02.2010 Gazette 2010/05)**

(54) **USING RAMAN SPECTROSCOPY TO CONTROL CARBONATE / BICARBONATE CONCENTRATIONS**

VERFAHREN ZUR REINIGUNG DER VERTEILERPLATTE IN EINEM FLÜSSIGBETTREAKTORSYSTEM

UTILISATION DE LA SPECTROSCOPIE RAMAN POUR ÉTABLIR LES CONCENTRATIONS DE CARBONATE/BICARBONATE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **29.07.2008 US 84524 P**

(43) Date of publication of application:
**13.04.2011 Bulletin 2011/15**

(73) Proprietor: **Powerspan Corp.**
**Portsmouth, NH 03801 (US)**

(72) Inventors:
• **BOSCO, Roberto**
**Rochester NH 03868 (US)**
• **GRANDJEAN, Brian**
**Amesbury MA01913 (US)**

(74) Representative: **Coyle, Philip Aidan et al**
**FRKelly**
**27 Clyde Road**
**Ballsbridge**
**Dublin 4 (IE)**

(56) References cited:
**WO-A1-2007/002503    WO-A1-2009/091437
US-A- 5 563 282**

• **RUDOLPH W W ET AL: "Speciation studies in aqueous HCO3<->-CO 3<2-> solutions. A combined Raman spectroscopic and thermodynamic study" DALTON TRANSACTIONS 2008 ROYAL SOCIETY OF CHEMISTRY; THOMAS GRAHAM HOUSE; SCIENCE PARK GB, vol. 8, no. 7, 10 December 2007 (2007-12-10), - 10 December 2007 (2007-12-10) pages 900-908, XP002561275**
• **SHERMAN A ET AL: "Lessons learned while optimizing instrument sensitivity for deep ocean Raman spectroscopy" OCEANS 2006 IEEE PISCATAWAY, NJ, USA, 2006 , page 6 pp., XP002561276 ISBN: 1-4244-0115-1**
• **WOLF G H ET AL: "In Situ Observation of CO2 Sequestration Reactions Using a Novel Microreaction System" ENVIRONMENTAL SCIENCE AND TECHNOLOGY 20040201 AMERICAN CHEMICAL SOCIETY US, vol. 38, no. 3, 1 February 2004 (2004-02-01), pages 932-936, XP002561277**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

1. Field of the Invention.

The invention relates to detecting chemical composition and controlling chemical processes using Raman spectroscopy.

2. Description of the Related Art.

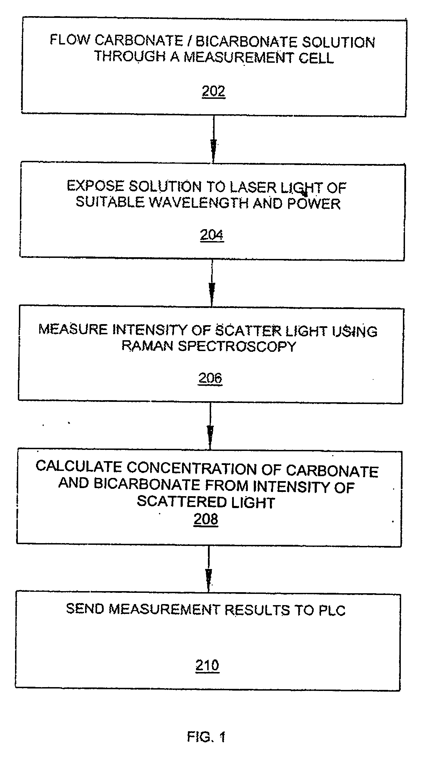

There are a number of useful chemical processes that require carbonate, bicarbonate and total carbonate measurements. One such process is a carbon dioxide scrubbing process in which carbonate and bicarbonate are the main components. Another example is producing carbon dioxide from an alkali carbonate/bicarbonate solution.
The conventional method of determining carbonate, bicarbonate, and total carbonate measurements uses acid/base titration. This is a batch system, which necessarily introduces a finite time lag in concentration measurements. The acid/base titration method is also plagued by interferences from various chemical compounds.
US-A-5 563 282 (Fig. 1) relates to commercial processes for manufacture of alkylene oxides and discloses that in such oxide manufacturing processes, carbon dioxide is formed as an unwanted by-product which is to be removed by scrubbing (absorbing) the carbon dioxide-bearing stream with an aqueous solution of alkali metal carbonates and (/or) bicarbonates. Fig. 1 shows a $CO_2$-bearing gaseous stream 1 which is fed to a $CO_2$ absorber column 2 where it is contacted counter-currently with Benfield solution, i.e., an aqueous potassium carbonate/bicarbonate solution promoted with vanadium oxide and boric acid. Similarly, Fig. 1 also shows how a bottom stream 4 passes through a heat exchanger 5 from which it is sent via stream 6 to a $CO_2$ regenerating column 7, in which $CO_2$ is separated and released to the atmosphere whereby bottom stream 8 from column 7 comprises an aqueous potassium carbonate/bicarbonate solution, promoted with vanadium oxide and boric acid. (Fig. 1) therefore discloses industrial chemical processes in which bicarbonate/carbonate solutions are used for respectively a $CO_2$ absorption (scrubbing) process and a regeneration process.
What is needed, therefore, is a continuous, online apparatus and method of detecting and controlling carbonate and bicarbonate concentrations in a chemical process that is not subject to interference from other chemical compounds.

SUMMARY

The invention relates to apparatus and methods that satisfy the need for a continuous, online way of detecting and controlling carbonate and bicarbonate concentrations in a chemical process that is not subject to interference from other chemical compound.
Apparatus and methods according to the present invention are defined by the following claims and will be understood with regard to the following description and drawings.

DRAWINGS

Fig. 1 is a process flow chart of a process determining bicarbonate / carbonate concentration using Raman spectroscopy according to the present invention.
Fig. 2 is a graph of the Raman spectrum of carbonate and bicarbonate.
Fig. 3 is a process flow chart of online concentration measurement of an alkali carbonate / bicarbonate scrubbing process and absorber control according to the present invention.
Fig. 4 is a process flow chart of online concentration measurement of a carbonate / bicarbonate regeneration process and regenerator control according to the present invention.

DESCRIPTION

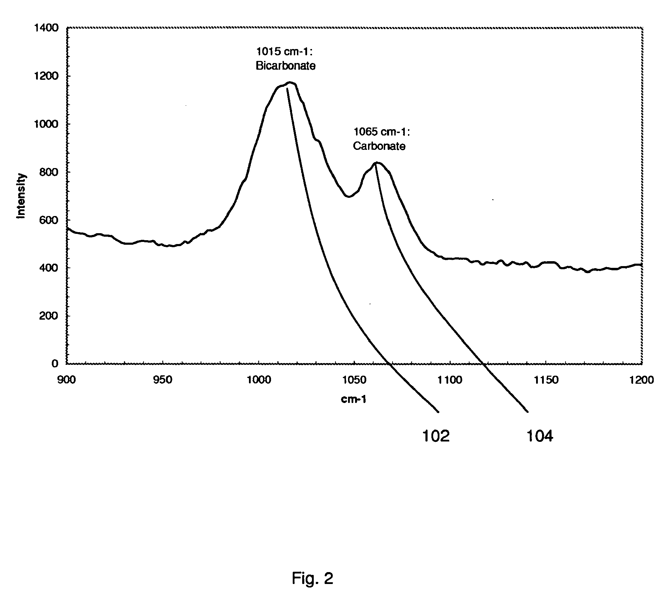

Turning to Fig. 1, one aspect of the invention is a method of controlling carbonate/bicarbonate concentrations in a chemical process having the steps of a) flowing a carbonate/bicarbonate solution through a measurement cell 202, (b) exposing the solution to laser light of suitable wavelength and power 204; c) measuring the intensity of the scattered light using Raman spectroscopy 206; d) calculating the concentration of carbonate and bicarbonate from the intensity of the scattered light 208; and (e) sending the measurement results to a programmable logic controller ("PLC") 210 to be used to control the ratio and concentration of carbonate and bicarbonate in the solution through adjusting process parameters.
Raman spectroscopy depends upon the inelastic scattering of monochromatic light. The incident light usually comes from a laser in the visible or ultraviolet range. When carbonate and/and bicarbonate are irradiated with the laser light, they shift the frequency of the light. This shift can be measured for both carbonate and bicarbonate and occurs at different frequencies. Turning to Fig. 2, bicarbonate has a peak 102 at approximately 1015 cm$^{-1}$ and carbonate has a peak 104 at approximately 1065 cm$^{-1}$.

By measuring the intensity of the scattered light either by peak height or peak area, the concentrations of each component can be determined. These two concentrations can then be used to calculate total carbonate.

The invention involves using Raman spectroscopy to identify and quantify carbonate and bicarbonate real time in a process that relies on the ratio of carbonate, and bicarbonate present as well as the total carbonate concentration. To our knowledge, there are presently no alternatives to performing this online.

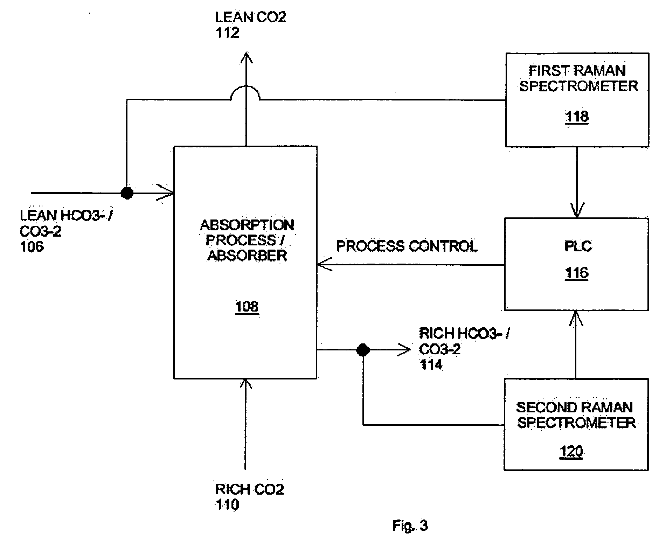

One embodiment is a carbon dioxide scrubbing process where carbonate and bicarbonate are the main components as shown in Fig. 3.

A "carbonate lean" solution 106 is introduced to a $CO_2$ absorption process / $CO_2$ absorber 108. A carbonate lean solution contains a ratio of $HCO_3^-/CO^{2-}$ greater than 1. Its composition is measured by a first Raman spectrometer 118. As $CO_2$ is absorbed into the carbonate solution, the following general reaction will take place:

$$CO_3^{-2} + H_2O + CO_2 \rightarrow 2HCO_3^- \qquad\qquad (1)$$

As this occurs, the total carbonate and carbonate/bicarbonate ratio will change. A "carbonate rich" solution with $HCO_3^- /CO_3^{-2}$ ratio less than 1 will exit the absorption process 114. Its composition is measured by a second Raman spectrometer 120. The carbonate/bicarbonate solution can be but is not limited to $Na_2CO_3/NaHCO_3$, $(NH_4)_2CO_3/NH_4HCO_3$, and $K_2CO_3/KHCO_3$. The important factor for controlling the ratio of carbonate and bicarbonate in the solution is that the carbonate be soluble in the solution being measured.

This method would be used to control the total carbonate concentration and to control the ratio carbonate concentration to bicarbonate concentration. The concentration values would be sent to a PLC 116 as feedback to the process control loops to the process / absorber 108. These factors are important because if the carbonate to bicarbonate ratio is not controlled it would,lead to poor absorption efficiency. If the total carbonate concentration is not controlled, it would lead to "salting out" or precipitation of the carbonate solution fouling mass and heat transfer surfaces. The method provides feedback to the PLC for adjusting parameters such as, but not limited to liquid flow rates, reagent addition rates, and temperatures.

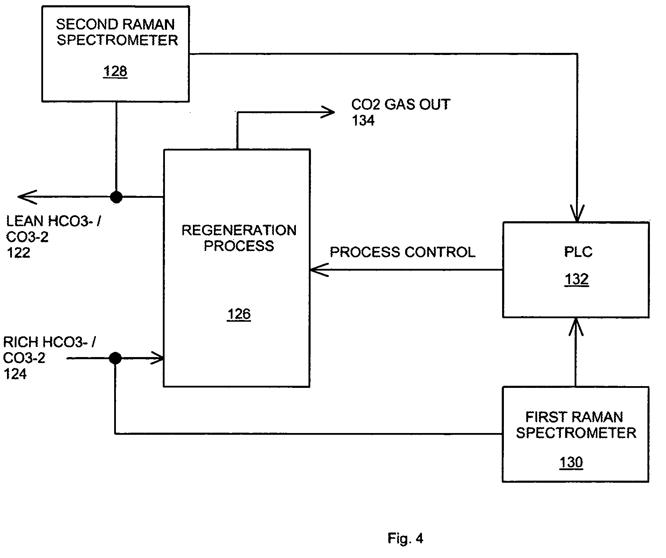

Turning to Fig. 4, another embodiment and process in which this invention can be used is the production of carbon dioxide from alkali carbonate / bicarbonate solutions. This can also be characterized as a carbonate / bicarbonate regeneration process / regenerator126. To produce $CO_2$ from alkali carbonate / bicarbonate solutions such as, but not limited to $Na_2CO_3/NaHCO_3$, $(NH_4)_2CO_3/NH_4HCO_3$, and $K_2CO_3/KHCO_3$, the reaction of equation (1) above is reversed. Bicarbonate is converted to carbonate, water and $CO_2$.

In such a process, feedback will be necessary to determine if the solution has been regenerated 126 to the degree required to by the process. A method of doing this is to measure the carbonate and bicarbonate concentrations along different points of the process.

A rich $HCO_3$ / $CO_3^{-2}$ solution 124 is introduced to a regeneration process 126. Its composition is measured by a first Raman spectrometer 130. $CO_2$ gas 134 is produced as a result of the regeneration process 126. A lean $HCO_3$ / $CO_3^{-2}$ solution 122 exits the regeneration process. Its composition is measured by a second Raman spectrometer 128.

Information from the first and second Raman spectrometers 130, 128 would be fed to a PLC 132, which would then control an energy input to the regeneration process 126. The Raman spectrometers would provide real time data input to a PLC or other automated controller that could then be used for either regeneration 126 or absorber 108 control.

One embodiment of a measurement system could include, but not be limited to, the following:

- Sample probe;
- Data transfer cables from probe to spectrometer;
- Spectrometer;
- Computer; and
- Output to PLC (analog or digital).

Although the preferred embodiments of the present invention have been described herein, the above description is merely illustrative. Further modification of the invention herein disclosed will occur to those skilled in the respective arts and all such modifications are deemed to be within the scope of the invention as defined by the appended claims.

**Claims**

1. A method of controlling carbonate/bicarbonate concentrations in a chemical process comprising the steps of:

   flowing a carbonate/bicarbonate solution through a measurement cell;
   exposing the solution to laser light of suitable wavelength and power;
   measuring the intensity of the scattered light using Raman spectroscopy;
   calculating the concentration of carbonate and bicarbonate from the intensity of the scattered light; and
   sending the measurement results to a programmable logic controller to be used to control the ratio of carbonate to bicarbonate and total carbonate concentration in the solution through adjusting process parameters.

2. A method of controlling bicarbonate/carbonate concentrations in a $CO_2$ absorption process comprising the steps of:

   providing a lean bicarbonate/carbonate solution having a bicarbonate/carbonate ratio of less than 1;
   measuring the lean bicarbonate/carbonate composition with a first Raman spectrometer;
   absorbing $CO_2$ with the learn bicarbonate/carbonate solution, thereby producing a rich bicarbonate/carbonate solution having a bicarbonate/carbonate ratio greater than 1;
   measuring the rich bicarbonate/carbonate solution with a second Raman spectrometer; and
   sending the lean bicarbonate/carbonate composition measurement and rich bicarbonate/carbonate to a programmable logic controller for controlling the $CO_2$ absorption process.

3. A method of controlling bicarbonate/carbonate solutions in a bicarbonate/carbonate regeneration process comprising the steps of:

   providing a rich bicarbonate/carbonate solution having a bicarbonate/carbonate ratio greater than 1;
   measuring the rich bicarbonate/carbonate solution with a first Raman spectrometer;
   regenerating the rich bicarbonate/carbonate solution thereby producing $CO_2$ and a lean bicarbonate/carbonate solution having a bicarbonate/carbonate ratio of less than 1;
   measuring the lean bicarbonate/carbonate solution with a second Raman spectrometer; and
   sending the rich bicarbonate/carbonate composition measurement and lean bicarbonate/carbonate to a programmable logic controller for controlling the regeneration process.

4. An apparatus for controlling bicarbonate/carbonate concentrations in a $CO_2$ absorber comprising:

   a $CO_2$ absorber (108) having as inputs a rich $CO_2$ stream and lean bicarbonate/carbonate stream, and having as outputs a lean $CO_2$ stream and rich bicarbonate/carbonate stream;
   a first Raman spectrometer (118) in communication with a lean bicarbonate / carbonate input stream for measuring the bicarbonate/carbonate concentration going into the $CO_2$ absorber;
   a second Raman spectrometer (120) in communication with a rich bicarbonate/carbonate stream output from the $CO_2$ absorber for measuring the bicarbonate/carbonate concentration leaving the $CO_2$ absorber; and
   a programmable logic controller (210) in communication with the first Raman spectrometer and second Raman spectrometer for receiving bicarbonate/carbonate concentration signals and outputting process control signals to the $CO_2$ absorber.

5. An apparatus for controlling bicarbonate/carbonate solutions in a bicarbonate/carbonate regeneration process comprising:

   a bicarbonate/carbonate regenerator (26) having as inputs a rich bicarbonate/carbonate stream and having as outputs a lean bicarbonate/carbonate stream and CO2;
   a first Raman spectrometer (118) in communication with a rich bicarbonate / carbonate input stream for measuring the bicarbonate/carbonate concentration going into the regenerator;
   a second Raman spectrometer (120) in communication with a lean bicarbonate/carbonate stream output from the regenerator for measuring the bicarbonate/carbonate concentration leaving the regenerator; and
   a programmable logic controller (210) in communication with the first Raman spectrometer and second Raman spectrometer for receiving bicarbonate/carbonate concentration signals and outputting process control signals to the regenerator.

**EP 2 307 863 B1**

**Patentansprüche**

1. Verfahren zur Regulierung von Carbonat/Bicarbonat-Konzentrationen in einem chemischen Verfahren, das die folgenden Schritte umfasst:

   Durchfließen einer Carbonat/Bicarbonat-Lösung durch eine Messzelle;
   Aussetzen der Lösung gegenüber Laserlicht von geeigneter Wellenlänge und Stärke;
   Messen der Intensität des gestreuten Lichts unter Verwendung von Raman-Spektroskopie;
   Berechnen der Konzentration von Carbonat und Bicarbonat aus der Intensität des gestreuten Lichts; und
   Senden der Messergebnisse an eine speicherprogrammierbare Steuereinrichtung zur Verwendung für die Regulierung des Verhältnisses von Carbonat zu Bicarbonat und der Gesamtkonzentration von Carbonat in der Lösung durch Abstimmen der Verfahrensparameter.

2. Verfahren zur Regulierung von Bicarbonat/Carbonat-Konzentrationen in einem $CO_2$-Absorptionsverfahren, das die folgenden Schritte umfasst:

   Bereitstellen einer dünnen Bicarbonat/Carbonat-Lösung, die ein Bicarbonat/Carbonat-Verhältnis von weniger als 1 hat;
   Messen der dünnen Bicarbonat/Carbonat-Zusammensetzung mit einem ersten Raman-Spektrometer;
   Absorbieren von $CO_2$ mit der dünnen Bicarbonat/Carbonat-Lösung, wodurch eine reiche Bicarbonat/Carbonat-Lösung, die ein Bicarbonat/Carbonat-Verhältnis von größer als 1 hat, erzeugt wird;
   Messen der reichen Bicarbonat/Carbonat-Lösung mit einem zweiten Raman-Spektrometer; und
   Senden der Messung der dünnen Bicarbonat/Carbonat-Zusammensetzung und der reichen Bicarbonat/Carbonat-Zusammensetzung an eine speicherprogrammierbare Steuereinrichtung zur Regulierung des $CO_2$-Absorptionsverfahrens.

3. Verfahren zur Regulierung von Bicarbonat/Carbonat-Lösungen in einem Bicarbonat/Carbonat-Regenerierungsverfahren, das die folgenden Schritte umfasst:

   Bereitstellen einer reichen Bicarbonat/Carbonat-Lösung, die ein Bicarbonat/Carbonat-Verhältnis von größer als 1 hat;
   Messen der reichen Bicarbonat/Carbonat-Lösung mit einem ersten Raman-Spektrometer;
   Regenerieren der reichen Bicarbonat/Carbonat-Lösung, wodurch $CO_2$ und eine dünne Bicarbonat/Carbonat-Lösung, die ein Bicarbonat/Carbonat-Verhältnis von weniger als 1 hat, erzeugt werden;
   Messen der dünnen Bicarbonat/Carbonat-Lösung mit einem zweiten Raman-Spektrometer; und
   Senden der Messung der reichen Bicarbonat/Carbonat-Zusammensetzung und der dünnen Bicarbonat/Carbonat-Zusammensetzung an eine speicherprogrammierbare Steuereinrichtung zur Regulierung des Regenerierungsverfahrens.

4. Vorrichtung zur Regulierung von Bicarbonat/Carbonat-Konzentrationen in einem $CO_2$-Absorber, die Folgendes umfasst:

   einen $CO_2$-Absorber (108), der als Einlässe einen reichen $CO_2$-Strom und einen dünnen Bicarbonat/Carbonat-Strom hat und als Auslässe einen dünnen $CO_2$-Strom und einen reichen Bicarbonat/Carbonat-Strom hat;
   ein erstes Raman-Spektrometer (118) in Verbindung mit einem dünnen Bicarbonat/Carbonat-Einlassstrom zur Messung der Bicarbonat/Carbonat-Konzentration, die in den $CO_2$-Absorber eingeht;
   ein zweites Raman-Spektrometer (120) in Verbindung mit einem reichen Bicarbonat/Carbonat-Auslassstrom aus dem $CO_2$-Absorber zur Messung der Bicarbonat/Carbonat-Konzentration, die den $CO_2$-Absorber verlässt; und
   eine speicherprogrammierbare Steuereinrichtung (210) in Verbindung mit dem ersten Raman-Spektrometer und dem zweiten Raman-Spektrometer zum Empfang von Signalen für Bicarbonat/Carbonat-Konzentrationen und zur Ausgabe von Signalen der Regulierung des Verfahrens an den $CO_2$-Absorber.

5. Vorrichtung zur Regulierung von Bicarbonat/Carbonat-Lösungen in einem Bicarbonat/Carbonat-Regenerierungsverfahren, die Folgendes umfasst:

   einen Bicarbonat/Carbonat-Regenerator (26), der als Einlässe einen reichen Bicarbonat/Carbonat-Strom hat und als Auslässe einen dünnen Bicarbonat/Carbonat-Strom und $CO_2$ hat;

ein erstes Raman-Spektrometer (118) in Verbindung mit einem reichen Bicarbonat/Carbonat-Einlassstrom zur Messung der Bicarbonat/Carbonat-Konzentration, die in den Regenerator eingeht;

ein zweites Raman-Spektrometer (120) in Verbindung mit einem dünnen Bicarbonat/Carbonat-Auslassstrom aus dem Regenerator zur Messung der Bicarbonat/Carbonat-Konzentration, die den Regenerator verlässt; und eine speicherprogrammierbare Steuereinrichtung (210) in Verbindung mit dem ersten Raman-Spektrometer und dem zweiten Raman-Spektrometer zum Empfang von Signalen für Bicarbonat/Carbonat-Konzentrationen und zur Ausgabe von Signalen der Regulierung des Verfahrens an den Regenerator.

## Revendications

1. Méthode de contrôle de concentrations en carbonate/bicarbonate dans un procédé chimique, comprenant les étapes consistant à :

   faire s'écouler une solution de carbonate/bicarbonate à travers une cellule de mesure ;
   exposer la solution à une lumière laser de longueur d'onde et de puissance convenables ;
   mesurer l'intensité de la lumière dispersée par spectroscopie Raman ;
   calculer la concentration en carbonate et bicarbonate à partir de l'intensité de la lumière dispersée ; et
   envoyer les résultats de mesure à un automate programmable industriel à utiliser pour contrôler le rapport carbonate/bicarbonate et la concentration totale en carbonate dans la solution par l'ajustement des paramètres de procédé.

2. Méthode de contrôle de concentrations en bicarbonate/carbonate dans un procédé d'absorption de $CO_2$, comprenant les étapes consistant à :

   fournir une solution pauvre en bicarbonate/carbonate ayant un rapport bicarbonate/carbonate inférieur à 1 ;
   mesurer la composition pauvre en bicarbonate/carbonate par un premier spectromètre Raman ;
   absorber du $CO_2$ par la solution pauvre en bicarbonate/carbonate, produisant ainsi une solution riche en bicarbonate/carbonate ayant un rapport bicarbonate/carbonate supérieur à 1 ;
   mesurer la solution riche en bicarbonate/carbonate par un deuxième spectromètre Raman ; et
   envoyer la mesure de la composition pauvre en bicarbonate/carbonate et riche en bicarbonate/carbonate à un automate programmable industriel pour contrôler le procédé d'absorption de $CO_2$.

3. Méthode de contrôle de solutions de bicarbonate/carbonate dans un procédé de régénération de bicarbonate/carbonate, comprenant les étapes consistant à :

   fournir une solution riche en bicarbonate/carbonate ayant un rapport bicarbonate/carbonate supérieur à 1 ;
   mesurer la solution riche en bicarbonate/carbonate par un premier spectromètre Raman ;
   régénérer la solution riche en bicarbonate/carbonate produisant ainsi du $CO_2$ et une solution pauvre en bicarbonate/carbonate ayant un rapport bicarbonate/carbonate inférieur à 1 ;
   mesurer la solution pauvre en bicarbonate/carbonate par un deuxième spectromètre Raman ; et
   envoyer la mesure de la composition riche en bicarbonate/carbonate et pauvre en bicarbonate/carbonate à un automate programmable industriel pour contrôler le procédé de régénération.

4. Appareil de contrôle des concentrations en bicarbonate/carbonate dans un absorbeur de $CO_2$, comprenant :

   un absorbeur de $CO_2$ (108) ayant comme entrées un courant riche en $CO_2$ et un courant pauvre en bicarbonate/carbonate, et ayant comme sorties un courant pauvre en $CO_2$ et un courant riche en bicarbonate/carbonate ;
   un premier spectromètre Raman (118) en communication avec un courant d'entrée pauvre en bicarbonate/carbonate afin de mesurer la concentration en bicarbonate/carbonate entrant dans l'absorbeur de $CO_2$;
   un deuxième spectromètre Raman (120) en communication avec un courant de sortie riche en bicarbonate/carbonate issu de l'absorbeur de $CO_2$ afin de mesurer la concentration en bicarbonate/carbonate quittant l'absorbeur de $CO_2$; et
   un automate programmable industriel (210) en communication avec le premier spectromètre Raman et le deuxième spectromètre Raman afin de recevoir les signaux de concentration en bicarbonate/carbonate et envoyer les signaux de contrôle de procédé à l'absorbeur de $CO_2$.

5. Appareil de contrôle de solutions de bicarbonate/carbonate dans un procédé de régénération de bicarbonate/carbonate, comprenant :

un régénérateur de bicarbonate/carbonate (26) ayant comme entrées un courant riche en bicarbonate/carbonate, et ayant comme sorties un courant pauvre en bicarbonate/carbonate et du $CO_2$ ;
un premier spectromètre Raman (118) en communication avec un courant d'entrée riche en bicarbonate/carbonate afin de mesurer la concentration en bicarbonate/carbonate entrant dans le régénérateur;
un deuxième spectromètre Raman (120) en communication avec un courant de sortie pauvre en bicarbonate/carbonate issu du régénérateur afin de mesurer la concentration en bicarbonate/carbonate quittant le régénérateur; et
un automate programmable industriel (210) en communication avec le premier spectromètre Raman et le deuxième spectromètre Raman afin de recevoir les signaux de concentration en bicarbonate/carbonate et envoyer les signaux de contrôle de procédé au régénérateur.

FLOW CARBONATE / BICARBONATE SOLUTION
THROUGH A MEASUREMENT CELL

202

EXPOSE SOLUTION TO LASER LIGHT OF
SUITABLE WAVELENGTH AND POWER

204

MEASURE INTENSITY OF SCATTER LIGHT USING
RAMAN SPECTROSCOPY

206

CALCULATE CONCENTRATION OF CARBONATE
AND BICARBONATE FROM INTENSITY OF
SCATTERED LIGHT
208

SEND MEASUREMENT RESULTS TO PLC

210

FIG. 1

Fig. 2

LEAN CO2
112

FIRST RAMAN
SPECTROMETER

**118**

LEAN HCO3- /
CO3-2
106

ABSORPTION
PROCESS /
ABSORBER

**108**

PROCESS CONTROL

PLC

**116**

RICH HCO3- /
CO3-2
114

SECOND RAMAN
SPECTROMETER

**120**

RICH CO2
110

Fig. 3

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5563282 A